(19) Europäisches Patentamt / European Patent Office / Office européen des brevets

(11) EP 2 998 699 B1

(12) **EUROPÄISCHE PATENTSCHRIFT**

(45) Veröffentlichungstag und Bekanntmachung des Hinweises auf die Patenterteilung:
**20.02.2019   Patentblatt 2019/08**

(51) Int Cl.:
**G01C 15/00** *(2006.01)*          **E02F 3/84** *(2006.01)*

(21) Anmeldenummer: **14185365.5**

(22) Anmeldetag: **18.09.2014**

(54) **Vorrichtung zum Bereitstellen einer Höhenreferenz für ein Werkzeug einer Baumaschine, Vorrichtung und Verfahren zur Höheneinstellung eines Werkzeugs einer Baumaschine, Baumaschine**

Device for providing a height reference for a tool of a construction machine, device and method for adjusting the height of a tool of a construction machine, construction machine

Procédé de traitement d'une référence de hauteur pour un outil d'un engin, dispositif et procédé de réglage en hauteur d'un outil d'un engin, engin

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.03.2016   Patentblatt 2016/12**

(73) Patentinhaber: **MOBA Mobile Automation AG 65555 Limburg (DE)**

(72) Erfinder:
• **Horn, Alfons Dipl.-Ing.**
  **65589 Hadamar-Steinbach (DE)**
• **Horn, Dominik**
  **65589 Hadamar-Steinbach (DE)**

(74) Vertreter: **Zimmermann, Tankred Klaus**
  **Schoppe, Zimmermann, Stöckeler**
  **Zinkler, Schenk & Partner mbB**
  **Patentanwälte**
  **Radlkoferstrasse 2**
  **81373 München (DE)**

(56) Entgegenhaltungen:
| | |
|---|---|
| EP-A1- 2 400 265 | EP-A2- 1 967 818 |
| EP-A2- 2 400 263 | DE-A1- 2 919 505 |
| DE-A1- 3 738 954 | DE-A1- 19 651 251 |
| US-A- 3 494 426 | US-A- 4 820 041 |
| US-A1- 2001 023 766 | US-B1- 6 314 650 |
| US-B1- 6 324 455 | |

EP 2 998 699 B1

## Beschreibung

Die vorliegende Erfindung bezieht sich auf das Gebiet von Baumaschinen, die zur Bearbeitung eines Untergrunds ein Werkzeug aufweisen, beispielsweise einen Straßenfertiger, eine Straßenfräse, eine Walze oder einen Grader. Insbesondere bezieht sich die vorliegende Erfindung auf eine Vorrichtung zum Bereitstellen einer Höhenreferenz für ein Werkzeug einer Baumaschine, auf eine Vorrichtung zur Höheneinstellung eines Werkzeugs einer Baumaschine bezüglich eines zu bearbeitenden Untergrunds, eine Baumaschine und ein Verfahren zur Höhensteuerung eines Werkzeugs einer Baumaschine.

Im Bereich der Bearbeitung eines Untergrunds unter Verwendung von Baumaschinen, beispielsweise im Straßenbau, ist das hochgenaue Steuern und Nivellieren der Baumaschine eine wichtige Aufgabe. Dieses hochgenaue Steuern und Nivellieren der Baumaschine erfolgt in der Regel mit der Unterstützung von angepassten und auf die Anwendung optimierten Nivelliersystemen. Das Nivelliersystem benötigt eine Referenz, die im Stand der Technik unter Verwendung eines mechanischen Referenzdrahtes (Spanndraht) aufgebaut ist, der beispielsweise am Straßenrand installiert ist und zur Höhennivellierung der Bohle eines Straßenfertigers dient. Diese Spanndrahtreferenz, die für die Nivellierung der Baumaschine verwendet wird, ist so aufgebaut, dass in Abständen von beispielsweise maximal 5 m ein mechanischer Stützpunkt installiert ist, der den Spanndraht über einen Halterungsmechanismus trägt. In engen Kurven und bei Längsneigungsänderungen der zu fertigenden Straße ist es erforderlich, die Abstände der Stützpunkte beim Installieren des Spanndrahtes derart zu reduzieren, dass eine exakte und dem Straßenverlauf angepasste Höhenreferenz entsteht.

Die Bereitstellung der Höhenreferenz unter Verwendung eines Referenzdrahtes ist nachteilhaft, da ein mechanisches Element, der Spanndraht bzw. das mechanische Seil, erforderlich ist, welches entlang der zu bearbeitenden Strecke zwischen den aufeinanderfolgenden Stützpunkten gespannt ist. Es ist erforderlich, zur Bereitstellung einer genauen Höhenreferenz, darauf zu achten, dass das Seil ausreichend gespannt ist, um auch zwischen den Stützpunkten die erwünschte Höhenreferenz bereitzustellen. Ferner stellt das gespannte Seil ein störendes Hindernis dar, auf das während der Fertigung zu achten ist, um eine Beschädigung oder Veränderung der Höhenreferenz zu vermeiden, da ansonsten das Seil erneut zu spannen ist, was mit einem zusätzlichen Aufwand einhergeht. Ferner sind zur Bereitstellung einer ausreichend hohen Genauigkeit geringe Abstände zwischen den Stützstellen erforderlich, was unter anderem einhergeht mit einem erhöhten Aufwand, z.B. im Hinblick auf die Kosten, bei der Installation, beispielsweise durch ein erforderliches Vermessen der Installationspunkte.

Die US 4,820,041 A betrifft ein Positionserfassungssystem, welches z.B. zur Planierung einer Ebene mittels einer Planiermaschine eingesetzt werden kann. Das System umfasst zwei Referenzstationen, die voneinander beabstandet angeordnet sind, benachbart zu einem Bereich, der zu überwachen bzw. zu markieren ist, und ferner ist eine tragbare Erfassungsstation vorgesehen, die aufeinanderfolgend an verschiedenen Positionen entlang der zu überwachenden Fläche angeordnet werden kann. Die Erfassungsvorrichtung 10 ist vorgesehen, um die planare Position des Empfängers bezüglich der planaren Positionen der zwei Referenzstationen zu erfassen, und ferner, um die Höhe des Empfängers bezüglich der Höhe einer der Referenzstationen festzustellen. Jede der Referenzstationen umfasst einen Lasersender, einen Laserdetektor und einen Funksender, der mit dem Laserdetektor gekoppelt ist. Der Lasertransmitter ist vorgesehen, um einen Laserstrahl auszugeben, der sich in einer Ebene mit einer konstanten Winkelgeschwindigkeit bewegt, so dass der Laserstrahl bei jeder Umdrehung sowohl den Empfänger als auch den Laserdetektor der anderen Referenzstation trifft.

Die DE 37 38 954 A1 beschreibt ein Laserstrahl-Nivelliergerät, welches die Neigung eines Laserstrahls in zwei rechtwinklig voneinander weisenden Achsen ermöglicht, um so eine um einen gewünschten Prozentsatz geneigte Ebene festzulegen. Ein ähnliches Gerät ist in der DE 196 51 251 A1 beschrieben.

Weitere, teilweise laserbasierte Ansätze zur Höhensteuerung von Werkzeugen von Baumaschinen werden in der EP 2 400 263 A2, der US 6,314,650 B1, der DE 29 19 505 A, der US 6,324,455 B1, der EP 2 400 265 A1, der US 2001/0023766 A1 und der US 3,494,426 A beschrieben.

Ausgehend von diesem Stand der Technik liegt der vorliegenden Erfindung die Aufgabe zugrunde, einen verbesserten Ansatz zur Höhensteuerung eines Werkzeugs einer Baumaschine zu schaffen.

Diese Aufgabe wird durch eine Vorrichtung gemäß Anspruch 1 und ein Verfahren gemäß Anspruch 5 gelöst.

Gemäß Ausführungsbeispielen wird die Laserebene derart erzeugt, dass ein zum Längsrichtungsvektor senkrechter Querrichtungsvektor eine vorbestimmte Neigung aufweist. Gemäß Ausführungsbeispielen sind die Lasertransceiver ausgebildet sind, um die Erzeugung einer Laserebene ansprechend auf eine Position der Baumaschine zu aktivieren. Gemäß Ausführungsbeispielen erzeugt der Lasersender zumindest einen rotierenden Laserstrahl.

Nicht unter die Erfindung fällt eine Vorrichtung zur Höheneinstellung eines Werkzeugs einer Baumaschine bezüglich eines zu bearbeitenden Untergrunds, mit

einem an dem Werkzeug der Baumaschine angeordneten Empfänger zum Empfangen von Lasersignalen, die durch eine erfindungsgemäße Vorrichtung zum Bereitstellen einer Höhenreferenz für ein Werkzeug einer Baumaschine bereitgestellt werden; und

einer Steuerung, die ausgebildet ist, um ansprechend auf ein durch den Empfänger empfangenes Lasersignal eine Höhe des Werkzeugs zu bestimmen, und ein Steuersignal zum Einstellen der Höhe des Werkzeugs über dem Untergrund auf einen erwünschten Wert zu erzeugen.

Gemäß Ausführungsbeispielen ist der Empfänger drehbar angeordnet, wobei der Empfänger derart ansteuerbar ist, dass der Empfänger bei einer Bewegung der Baumaschine eine vorbestimmte Ausrichtung zu dem Lasersignal beibehält. Gemäß Ausführungsbeispielen ist die Steuerung ausgebildet, um eine Glättung der Laserebene oder eine Glättung von zwei aufeinanderfolgenden Laserebenen zu bewirken.

Nicht unter die Erfindung fällt auch eine Baumaschine, mit:

einem Werkzeug zum Bearbeiten eines Untergrunds; und

einer erfindungsgemäße Vorrichtung zur Höheneinstellung eines Werkzeugs einer Baumaschine bezüglich eines zu bearbeitenden Untergrunds.

Gemäß Ausführungsbeispielen umfasst die Baumaschine eine Straßenbaumaschine, beispielsweise einen Straßenfertiger, eine Straßenfräse, eine Walze oder einen Grader.

Die vorliegende Erfindung schafft ein Verfahren zur Höhensteuerung eines Werkzeugs einer Baumaschine, mit folgenden Schritten:

Erzeugen einer Laserebene durch eine erfindungsgemäße Vorrichtung zum Bereitstellen einer Höhenreferenz für ein Werkzeug einer Baumaschine;

Empfangen eines Laserstrahls an einem Empfänger, der an dem Werkzeug der Baumaschine angeordnet ist;

basierend auf dem empfangenen Laserstrahl, Bestimmen einer Höhe des Werkzeugs bezüglich eines zu bearbeitenden Untergrunds; und

basierend auf der bestimmten Höhe und einer Soll-Höhe, Steuern des Werkzeugs auf die Soll-Höhe.

Erfindungsgemäß wird die oben beschriebene mechanische Höhenreferenz, der Referenzdraht, für die Nivellierung von Werkzeugen von Baumaschinen, beispielsweise für die Nivellierung von Straßenbaumaschinen, durch eine Laserhöhenreferenz ersetzt. Der Grundgedanke der vorliegenden Erfindung liegt darin, eine Nivellierung basierend auf einer einfachen Erzeugung einer Laserreferenzebene zu ermöglichen, an der sich die Straausrichten kann. Die Laserebenen werden erfindungsgemäß von sogenannten Lasertransceivern, Lasersendern mit eingebauten Empfängern, erzeugt. Die Ausrichtung der Laserebene erfolgt unter Verwendung der Lasertransceiver automatisch und ist hochpräzise.

Gegenüber den oben beschriebenen, herkömmlichen Ansätzen, welche ein mechanisches Seil zur Bereitstellung einer Höhenreferenz verwenden, ist der erfindungsgemäße Ansatz vorteilhaft, da kein störendes Seil mehr erforderlich ist. Ferner ermöglicht die Verwendung der Laserebene große Abstände bei den Stützstellen, insbesondere entlang gerader Streckenabschnitte. Verglichen mit der mechanischen Höhenreferenz lässt sich die Laserhöhenreferenz schneller aufbauen und geht einher mit einer Kostenreduktion beim Vermessen der Laserreferenzpunkte. Ferner bietet sich die Möglichkeit, den Laser-Polygonzug, d.h. die ggf. mehreren aufeinanderfolgenden Laserebenen, mithilfe einer Glättungsfunktion dem erwünschten Straßenverlauf anzupassen. Beim Aufbau der Referenz ist es erfindungsgemäß nicht erforderlich, diese durch einen Vermesser durchführen zu lassen, vielmehr kann dies auch durch Nicht-Vermesser erfolgen. Der Einsatz der erfindungsgemäßen Laserhöhenreferenz ermöglicht gemäß Ausführungsbeispielen ein automatisches Ausrichten der Lasersender auf die zugeordneten Laserempfänger, was eine Vereinfachung beim Aufbau und eine Erhöhung der Genauigkeit bewirkt.

Gemäß Ausführungsbeispielen kann die erfindungsgemäße Laserhöhenreferenz bei unterschiedlichen Baumaschinen eingesetzt werden, wie beispielsweise einem Straßenfertiger, einem Grader, einer Fräse oder einer Walze und ermöglicht eine hochgenaue Nivellierung der Baumaschine bzw. des Werkzeugs der Baumaschine, welche zur Bearbeitung des Untergrunds dient.

Gegenüber herkömmlichen Lasertransmittern, wie sie im Stand der Technik bekannt sind, ist der erfindungsgemäße Ansatz der Bereitstellung einer Laserhöhenreferenz vorteilhaft, da eine dem Verlauf der zu bearbeitenden Oberfläche, z.B. dem Straßenverlauf, angepasste Höhenkontur als Referenz ohne Weiteres einstellbar ist, wodurch eine hochgenaue Nivellierung der Baumaschine erreicht wird.

Gegenüber herkömmlichen Theodoliten ist der erfindungsgemäße Ansatz vorteilhaft, da eine automatische Ausrichtung der Lasertransceiver erfolgt und kein Vermesser-Personal während des Einbaus erforderlich ist, was zu einer Kostenreduktion führt. Ferner lässt sich die Laserreferenz schnell aufbauen und ermöglicht eine genauere Nivellierung der Baumaschine.

Gegenüber bekannten GPS-Lösungen (GPS = Global Positioning System = Globales Positionierungssystem) ergibt sich eine noch genauere Nivellierung der Baumaschine, insbesondere entlang der z-Achse (Höhe).

Ausführungsbeispiele der vorliegenden Erfindung werden nachfolgend unter Bezugnahme auf die beiliegenden Zeichnungen näher erläutert. Es zeigen:

Fig. 1      eine schematische Darstellung einer zu bearbeitenden Strecke, anhand der das erfindungsgemäße Prinzip der Laserhöhenreferenz erläutert wird;

Fig. 2      den Höhenverlauf eines sich einstellenden Laser-Polygonzuges für den Straßenverlauf gemäß Fig. 1;

Fig. 3      Darstellung von zwei benachbarten Lasertransceivern LTR A und LTR B und des Längsrichtungs- und Querrichtungsvektors des LTR A;

Fig. 4      eine schematische Darstellung von zwei benachbarten Lasertransceivern, von denen der eine einen Laserstrahl aussendet und der andere den Laserstrahl empfängt;

Fig. 5      eine schematische Darstellung eines Laserempfängers, der beispielsweise in dem Lasertransceiver LTR B aus Fig. 4 verwendet wird;

Fig. 6      eine Strecke, entlang der vier Lasertransceiver angeordnet sind, wobei ein erster Lasertransceiver einen Abgleich seiner Laserebene mit einem benachbarten Lasertransceiver durchführt;

Fig. 7      die Strecke aus Fig. 6, wobei ein zweiter Lasertransceiver einen Abgleich seiner Laserebene mit einem benachbarten Lasertransceiver durchführt;

Fig. 8      eine Tabelle, die einen Überblick über Verweildauern eines rotierenden Laserstrahls auf einem Detektor bei drei unterschiedlichen Rotationsgeschwindigkeiten und die entsprechenden Entfernungen angibt;

Fig. 9      schematisch zwei Ansätze für eine konvexe/konkave Glättung eines Laser-Polygonzuges, der durch drei Lasertransceiver erzeugt wird, wobei Fig. 9(a) eine Glättung um einen Lasertransceiver zeigt, und wobei Fig. 9(b) eine Glättung der Strecken zwischen benachbarten Lasertransceivern zeigt;

Fig. 10     eine schematische Darstellung zur Erläuterung der Bestimmung einer Höhenausgleichslinie gemäß einem Ausführungsbeispiel;

Fig. 11     eine schematische Darstellung zur Erläuterung der Bestimmung des Laser-Schnittwinkel $\alpha$ zwischen den Laserebenen, die durch benachbarte LTRs aufgespannt werden, gemäß dem anhand der Fig. 10 erläuterten Ausführungsbeispiel;

Fig. 12     eine schematische Darstellung zur Erläuterung der Ermittlung der Höhenausgleichslinie durch symmetrischen Ausgleich mit Parabelfunktion gemäß einem Ausführungsbeispiel;

Fig. 13     schematisch das Aktivschalten einer Laserebene, die positionsmäßig mit einer Baumaschinenposition maximal korreliert; und

Fig. 14     eine automatische Ausrichtung des Laserempfängers des Nivelliersystems, um vorzugsweise orthogonale Ausrichtungen desselben an verschiedenen Positionen entlang einer Nivellierlinie beizubehalten.

In der nachfolgenden Beschreibung der Ausführungsbeispiele werden in den beiliegenden Zeichnungen gleiche oder gleichwirkende Elemente mit den gleichen Bezugszeichen versehen. Die nachfolgende Erläuterung erfolgt basierend auf der Steuerung eines Straßenfertigers, es sei jedoch darauf hingewiesen, dass das erfindungsgemäße Prinzip auf beliebige Baumaschinen zur Bearbeitung eines Untergrunds anwendbar ist.

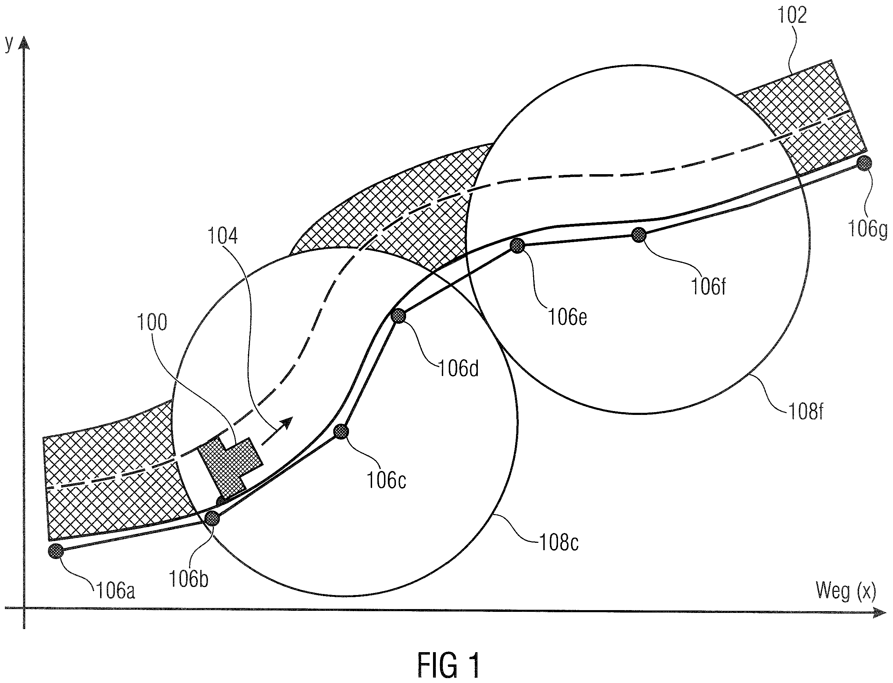

Anhand der Fig. 1 wird nachfolgend das erfindungsgemäße Prinzip der Laserhöhenreferenz näher erläutert. In Fig. 1 ist schematisch eine Baumaschine 100, in dem gezeigten Ausführungsbeispiel ein Straßenfertiger, dargestellt, der vorgesehen ist, um entlang einer Strecke 102, beispielsweise einer zu fertigenden Straße, eine Asphaltlage mit einer vorbestimmten Dicke aufzubringen. Der Straßenfertiger 100 bewegt sich entlang der Strecke 102, wie dies durch den Pfeil 104 angedeutet ist. Entlang der zu bearbeitenden Strecke 102 ist die erfindungsgemäße Laserhöhenreferenz aufgebaut, die eine Mehrzahl von Lasertransceivern 106a bis 106g umfasst, die mit vorbestimmten Abständen entlang der Strecke 102 angeordnet sind. In Fig. 1 ist schematisch eine erste Laserebene 108c sowie eine zweite Laserebene 108f dargestellt, die durch die Lasersender der Lasertransceiver 106c bzw. 106f erzeugt wird. Die Lasersender der Lasertransceiver 106a bis 106g können gemäß Ausführungsbeispielen rotierende Laser umfassen, die einen oder mehrere rotierende Laserstrahlen erzeugen, um eine Laserebene, beispielsweise die Laserebene 108c zu definieren. Alternativ kann aber auch ein nicht-drehbarer Lasersender vorgesehen sein, der eine Mehrzahl von laseremittierenden Elementen umfasst, die kreisförmig zur Definition einer Laserebene angeordnet sind. Gemäß Ausführungsbeispielen wird die Verwendung eines Rotationslasers bevorzugt, da dieser eine höhere Auflösung gegenüber einem stationären Laser im Hinblick auf die Definition der Laserebene ermöglicht.

Der Straßenfertiger 100 empfängt mittels eines in Fig. 1 nicht dargestellten Empfängers einen Laserstrahl, der von dem Lasertransceiver 106c ausgesendet wird, und bestimmt basierend auf dem Empfang desselben eine Höhenposition seiner Bohle, des Werkzeugs, und stellt die Bohle entsprechend der erfassten Höhe und entsprechend einer Soll-Höhe ein, so dass die Soll-Höhe erreicht wird. Die Laserempfangseinheit ist z.B. an dem Werkzeug der Baumaschine 100 angeordnet, um die Laserebene zu detektieren und die hieraus gewonnene relative Höhenposition auszuwerten. Ein übergeordnetes Steuer- oder Nivellierungssystem übernimmt dann die relative Höheninformation, bildet ein Regelabweichungssignal und steuert eine Stelleinheit des Werkzeugs der Baumaschine entsprechend an, so dass die Regelabweichung von einer Soll-Einstellung gegen Null tendiert.

Erfindungsgemäß wird somit, wie anhand der Fig. 1 erläutert wurde, der im Stand der Technik beschriebene Referenzdraht durch die Laserebenen 108c und 108f im Raum ersetzt. Die Laserebene wird automatisch durch einen Lasersender bzw. Lasertransmitter erzeugt. Bei dem anhand der Fig. 1 beschriebenen Ausführungsbeispiel umfasst der Laser neben dem Lasertransmitter vorzugsweise auch eine Laserempfangseinheit, so dass sich der oben erwähnte Lasertransceiver ergibt. An dieser Stelle sei darauf hingewiesen, dass in der nachfolgenden Beschreibung stets von einem Lasertransceiver die Rede ist, die Erfindung jedoch nicht hierauf beschränkt ist. Tatsächlich ist es auch möglich, getrennte Lasersender und Laserempfänger vorzusehen.

Somit wird erfindungsgemäß, ausgehend von dem Aufbau einer Spanndrahtreferenz, nunmehr die Möglichkeit geschaffen, eine Laserreferenz für die Nivellierung einer Baumaschine zu verwenden, wobei grundsätzlich die Überlegung zugrundeliegt, die Geometrie der Höhenreferenz, wie sie auch beim Spanndraht vorhanden ist, beizubehalten. Dies bedeutet, dass die Laserreferenz etwa identisch mit der Spanndrahtreferenzhöhe zu installieren ist, wobei, vorzugsweise, in der Praxis die Laserebenen mit einer Verschiebung (Offset) nach oben versehen werden, beispielsweise drei oder mehr Meter, so dass Personen oder Gegenstände den Strahl nicht unterbrechen, wodurch sich eine zuverlässigere Höhenreferenz ergibt, und die oben erwähnten Probleme bei der Spanndrahtlösung vermieden werden.

Wie oben erwähnt, erfordert ein Spanndraht gemäß herkömmlichen Ansätzen in gewissen Abständen eine Stützstelle, und ebenso erfordert die Laserreferenz mehrere Stützstellen, wobei diese durch Aufstellen bzw. Installieren der anhand der Fig. 1 erläuterten Lasertransceiver (LTR) realisiert werden. Die Abstände der Stützstellen können erfindungsgemäß jedoch, je nach Straßenverlauf und Anforderung, um ein Vielfaches gegenüber der Abstützung bei der Spanndrahtreferenz erhöht werden. Durch die Aufstellung mehrerer LTRs entlang des Straßenverlaufs, wie es anhand der Fig. 1 gezeigt ist, ergibt sich ein entsprechender Laser-Polygonzug, der in erster Näherung die gewünschte Höhenreferenz repräsentiert. Gemäß Ausführungsbeispielen, wie sie nachfolgend noch näher erläutert werden, kann eine Anpassung der Laserreferenz an das erwünschte Höhenprofil über Glättungsmechanismen erfolgen.

Bei herkömmlichen Ansätzen wird die Spanndrahtreferenz durch einen Höhenregler oder Höhensensor abgetastet, der an der Baumaschine befestigt ist, um ein Höhenabweichungssignal zu ermitteln. Demgegenüber wird gemäß Ausführungsbeispielen der Erfindung die Laserebene durch einen proportionalen Laserempfänger an der Baumaschine erfasst.

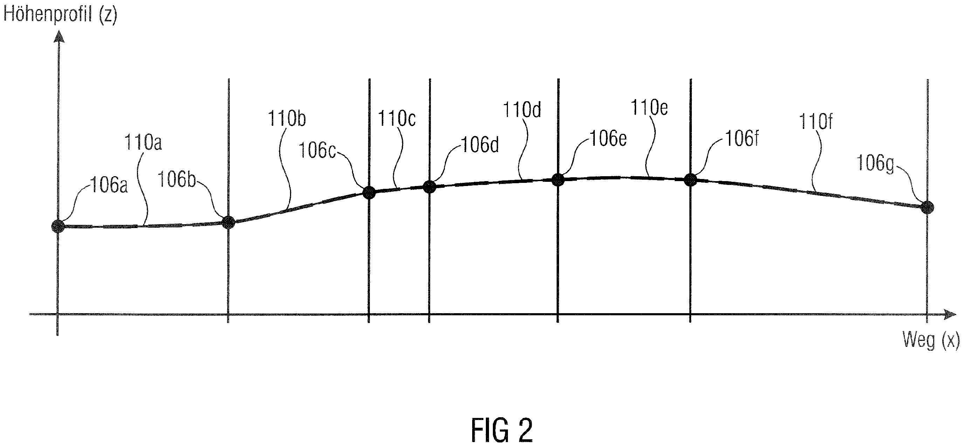

Fig. 1 zeigte einen möglichen Straßenverlauf mit entsprechend aufgestellten Lasertransceivern 106a bis 106g in der xy-Ebene, und die Fig. 2 zeigt den entsprechenden Höhenverlauf eines sich einstellenden Laser-Polygonzuges für den Straßenverlauf gemäß Fig. 1. Fig. 2 zeigt den Höhenverlauf in der xz-Ebene und die unterschiedlichen Höhenpositionen der Lasertransceiver 106a bis 106g sowie die jeweiligen Abstände der Lasertransceiver voneinander. Wie zu erkennen ist, ergibt sich der Abstand der Lasertransceiver abhängig vom Streckenprofil, welches zu erzeugen ist, beispielsweise abhängig von einem Grad der Änderung der Höhe bzw. abhängig von einem Grad der Richtungsänderung der Strecke, was bedeutet, dass bei starken Änderungen geringere Abstände erforderlich sind als bei geringeren Änderungen. So kann beispielsweise ein größerer Abstand zwischen den Lasertransceivern 106a und 106b bzw. 106f und 106g gewählt werden, da hier eine Richtungsänderung in der xy-Ebene nicht vorliegt und eine gleichmäßige Höhenänderung gegeben ist. Die Abstände zwischen den gerade genannten Transceivern sind größer als die Abstände zwischen den verbleibenden, dargestellten Lasertransceivern, da sich in den Streckenabschnitten zwischen dem Lasertransceiver 106b und 106f stärkere Änderungen im Hinblick auf die Richtung der Strecke bzw. im Hinblick auf das Höhenprofil ergeben, so dass dort mehr Stützpunkte erforderlich sind, um über die jeweiligen, durch die Lasertransceiver erzeugten Laserebenen eine möglichst genaue Anpassung an den tatsächlichen Streckenverlauf sicherzustellen. In Fig. 2 sind mit den Bezugzeichen 110a bis 110f die sogenannten Laserverbindungslinien oder Längsrichtungsvektoren der jeweiligen, durch die Lasertransceiver 106a bis 106g erzeugten Laserebenen angedeutet. Die Längsrichtungsvektoren 110a bis 110f sind ausgehend von dem die Laserebene erzeugenden Lasertransceiver auf den nächsten, in Bearbeitungsrichtung liegenden Lasertransceiver gerichtet.

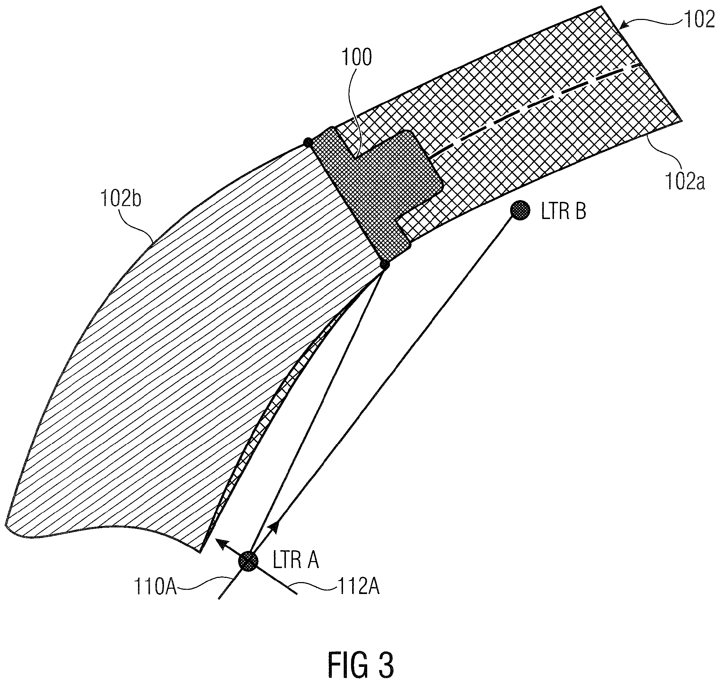

Die anhand der Fig. 1 erwähnten Laserebenen können auf verschiedene Arten im Raum eindeutig beschrieben werden, beispielsweise durch drei Referenzpunkte, durch zwei Referenzpunkte und eine Neigung oder durch einen Referenzpunkt und zwei Neigungen. Gemäß Ausführungsbeispielen wird, analog zum Spannseil, für die eindeutige Bestimmung der Laserebene eine Definition mit zwei Referenzpunkten und einer Neigung verwendet, da entlang der zu bearbeitenden Strecke im Regelfall mindestens zwei Lasertransceiver in Sichtweite zueinander angeordnet sind, und somit eine Laserreferenzlinie, die oben erwähnte Laserverbindungslinie, existiert. Wie oben erwähnt, legt diese Laserreferenzlinie gleichzeitig den Längsrichtungsvektor der Laserebene fest, wie dies anhand der Fig. 3 verdeutlicht ist, welche die Ausrichtungsvektoren einer Laserebene verdeutlicht. Der Längsrichtungsvektor beinhaltet auch eine absolute Neigungsinformation, die über einen Neigungssensor erfasst wird, wobei sich der Neigungssensor z.B. auf der Laserebenenmechanik befindet. In Fig. 3 ist eine Darstellung ähnlich der Fig. 1 dargestellt, bei der jedoch lediglich zwei benachbarte Lasertransceiver LTR A und LTR B dargestellt sind, die entlang der zu bearbeitenden Strecke 102 angeordnet sind, entlang der sich der Fertiger 100 bewegt. Bei dem in Fig. 3 dargestellten Ausführungsbeispiel ist mit dem Bezugzeichen 102a die noch nicht bearbeitete Strecke bezeichnet, und mit dem Bezugzeichen 102b die bereits bearbeitete Strecke, beispielsweise eine Strecke, auf der bereits eine neue Asphaltlage mittels des Straßenfertigers 100 aufgebracht wurde. In Fig. 3 ist der Längsrichtungsvektor 110A des Lasertransceivers LTR A dargestellt, der auf den benachbarten Lasertransceiver LTR B gerichtet ist, so dass durch die zwei Lasertransceiver die zwei Referenzpunkte zur Definition der Laserebene festgelegt sind. Für die eindeutige Lagebestimmung im Raum ist zusätzlich der in Fig. 3 gezeigte Querrichtungsvektor 112A der Laserebene einzustellen, was gemäß Ausführungsbeispielen durch eine entsprechende Neigung des Laserkopfes, die durch einen Neigungssensor eingestellt wird, erreicht wird. Vorzugsweise wird der Querrichtungsvektor so eingestellt, dass die Neigung der Laserebene in Querrichtung 0° ist. Somit wird der Längsrichtungsvektor 110A durch die zwei Lasertransceiver LTR A und LTR B bestimmt, und der Querrichtungsvektor 112A wird durch eine Neigung des Lasers eingestellt, beispielsweise unter Verwendung eines in dem Lasertransceiver enthaltenen Neigungssensors.

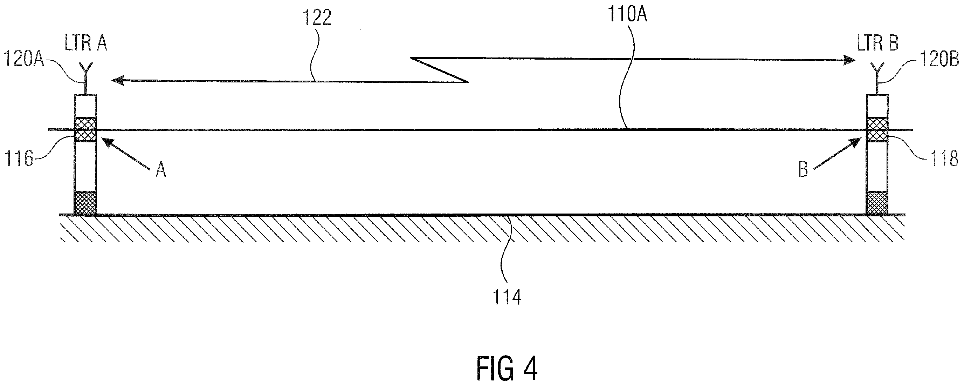

Fig. 4 zeigt eine schematische Darstellung von zwei benachbarten Lasertransceivern LTR A und LTR B, die auf dem Untergrund 114 angeordnet sind, wobei der Lasertransceiver LTR A einen Lasersender 116 aufweist, der einen Laserstrahl aussendet, und der Lasertransceiver LTR B umfasst einen Laserempfänger 118 zum Empfangen des Laserstrahls. Der Lasersender 116 des Lasertransceivers LTR A und der Laserempfänger 118 des LTR B sind beabstandet von dem Untergrund 114 angeordnet und definieren jeweils einen Referenzpunkt A bzw. B bezüglich des Untergrunds 114. Jeder der Lasertransceiver LTR A und LTR B umfasst bei dem gezeigten Ausführungsbeispiel eine Antenne 120A, 120B, um eine Kommunikation zwischen den zwei Lasertransceivern über eine Funkverbindung 122 zu ermöglichen. Bei anderen Ausführungsbeispielen kann anstelle einer Funkverbindung auch eine andere Verbindung gewählt werden, beispielsweise eine optische Verbindung, ggf. eine optische Verbindung unter Verwendung des eigentlichen Laserstrahls, der dann mit zusätzlichen Informationen moduliert ist. Die anhand der Fig. 4 dargestellten Lasertransceiver LTR A und LTR B ermöglichen einen automatischen Laserebenenabgleich, der für die Laserebenenjustierung eine Kommunikation zwischen den beiden Lasertransceivern erfordert, die bei dem gezeigten Ausführungsbeispiel über die Funkverbindung 122 erfolgt. Gemäß Ausführungsbeispielen umfasst die Funkkommunikation ein Master-Slave-Verfahren, wobei der Lasertransceiver, der die Master-Funktionalität besitzt, den Laserebenenabgleich startet.

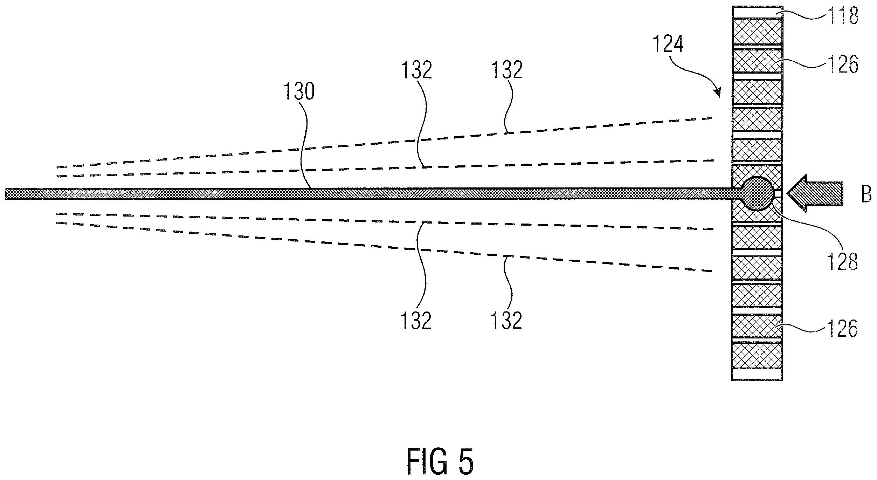

Die Fig. 5 zeigt eine schematische Darstellung eines Laserempfängers 118, der beispielsweise in dem Lasertransceiver LTR B aus Fig. 4 verwendet wird. Der Laserempfänger 118 umfasst ein Fotozellenarray 124 mit einer Mehrzahl von Fotozellen 126, die vertikal zueinander angeordnet sind. Das Fotozellenarray 124 umfasst eine zentrale Fotozelle 128, die an einer vorbestimmten Position entlang des vertikalen Fotozellenarrays 124 angeordnet ist, z.B. in der Mitte des Fotozellenarrays, und die als Lasernullpunkt oder Referenzpunkt B (siehe Fig. 4) bezeichnet wird. Sind die Lasertransceiver LTR A und LTR B aus Fig. 4 korrekt zueinander ausgerichtet, so stimmen der Referenzpunkt A in Fig. 4 (Laserstrahlaustrittspunkt am LTR A) und der Referenzpunkt B (Laserempfängernullpunkt am LTR B) höhenmäßig überein.

Nach dem Aufstellen der Lasertransceiver, beispielsweise der zwei in Fig. 4 gezeigten Lasertransceiver bewirkt der Lasertransceiver, der die Master-Funktionalität aufweist, beispielsweise der Lasertransceiver LTR A, den Laserebenenabgleich. Der Längsrichtungsvektor 110A der Laserlinie des LTR A wird in einem ersten Schritt mithilfe der Laserempfängereinheit 118 des LTR B so eingestellt, dass sich eine hochgenaue Laserlinie zwischen dem LTR A und dem LTR B einstellt, nämlich so, dass der von dem LTR A ausgesendete Laserstrahl auf den Lasernullpunkt 128 des Empfängers 118 trifft, wie dies schematisch durch den Laserstrahl 130 in Fig. 5 gezeigt ist. Wird am Empfänger 118 des LTR B eine Positionsabweichung der Laserlinie 130 und damit der Laserebene von dem Lasernullpunkt 128 festgestellt (siehe Fig. 5), so erfolgt eine entsprechende Rückkopplung über die Funkverbindung 122 (siehe Fig. 4) an den LTR A, der eine Korrektur der Laserlinie 130 durchführt. Fig. 5 zeigt beispielhaft verschiedene, abweichende Laserlinien 132, d.h. Laserlinien, die von der idealen Laserlinie 130, die auf den Lasernullpunkt 128 gerichtet ist, abweichen. Eine solche Abweichung wird über das Fotozellenarray 124 detektiert, da nunmehr ein Laserstrahl an einer Fotozelle 126 erfasst wird, die von der Laserzelle 128 abweicht. Die Abweichung wird vom LTR B über die Funkverbindung 122 an den LTR A kommuniziert, wobei der LTR A beispielsweise über Stellmotoren eine Justierung des Lasersenders in der Höhenrichtung durchführt, bis von dem LTR B über die Funkverbindung 122 die Rückmeldung empfangen wird, dass der empfangene Laserstrahl im Lasernullpunkt 128 empfangen wird.

Der Querneigungsvektor 112 (siehe Fig. 3) der durch den LTR A erzeugten Laserebene wird über eine Neigung des LTR A ausgerichtet, die über einen Querneigungssensor erfasst wird. In gleicher Weise erfolgt eine identische Abgleichung für den LTR B.

Nachdem anfänglichen Abgleich erfolgt auch im aktiven Betrieb eine gegenseitige Überwachung der LTRs, so dass Störgrößen, wie beispielsweise mechanische Lageveränderungen der LTRs oder Refraktionen in der Luft, zu jedem Zeitpunkt ausgeregelt werden.

Wie oben anhand der Fig. 1 erläutert wurde, werden gemäß Ausführungsbeispielen mehrere Lasertransceiver 106a bis 106f entlang der zu bearbeitenden Strecke 102, z.B. der Straße, aufgestellt, die sich miteinander verbinden. Gemäß Ausführungsbeispielen ist vorgesehen, die aufgestellten Lasertransceiver so zu adressieren, dass diese nacheinander einen Laserebenenabgleich durchführen. Eine einfache Adressierungsmöglichkeit ist beispielsweise das automatische Festlegen einer Adresse über die Position des entsprechenden Lasertransceivers, die z.B. mithilfe eines eingebauten GPS-Empfängers in dem LTR oder durch eine Laserabstandsmessung.

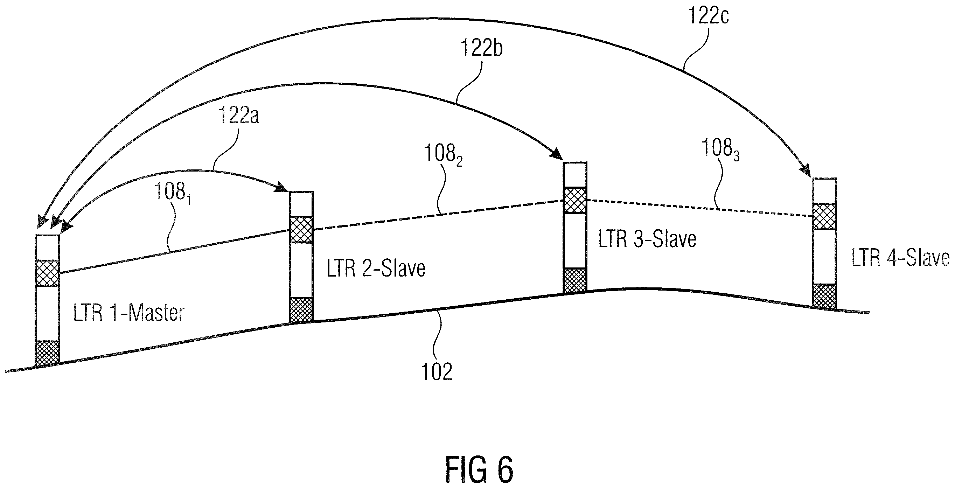

Beispielhaft sei die Anordnung von vier LTRs entlang einer Strecke angenommen, wie es anhand der Fig. 6 gezeigt ist. In Fig. 6 ist die Strecke 102 dargestellt, entlang der vier Lasertransceiver LTR 1 bis LTR 4 angeordnet sind, wobei die Fig. 6 eine Darstellung der Anordnung der Lasertransceiver in der xz-Ebene darstellt. Der Lasertransceiver LTR 1 erzeugt die Laserebene $108_1$, der Lasertransceiver LTR 2 erzeugt die Laserebene $108_2$ und der Lasertransceiver LTR 3 erzeugt die Laserebene $108_3$. Eine Bearbeitung der Strecke 102 soll ausgehend vom Lasertransceiver LTR 1 in Richtung des Lasertransceivers LTR 4 erfolgen, so dass der Lasertransceiver LTR 1, der sich am Anfang der LTR-Kette, die in Fig. 6 gezeigt ist, zu Beginn des Abgleichprozesses als Master-LTR bezeichnet wird, der den Prozess für den Abgleich der Laserebenen $108_1$ bis $108_3$ startet. Wie in Fig. 6 schematisch durch die Funkverbindungen 122a bis 122c dargestellt ist, kommuniziert der Master-LTR (LTR 1) mit allen im Empfangsbereich vorhandenen Slave-LTRs, den LTR 2, LTR 3 und LTR 4. Die Slave-LTRs übertragen ihren jeweiligen Abstand zum Master-LTR oder ihre xyz-Koordinaten an den Master-LTR und warten dann auf weitere Kommunikationsbefehle. Der Master-LTR, LTR 1, bestimmt den Slave-LTR, der die kürzeste Entfernung zum Master-LTR aufweist, in Fig. 6 der LTR 2. Der Master-LTR beginnt nun eine Kommunikation mit dem Slave-LTR, um den oben beschriebenen automatischen Abgleichvorgang der Laserebene $108_1$ (siehe Fig. 4 und fig. 5) durchzuführen. Während dieses Vorgangs können die anderen Laserebenen $108_2$, $108_3$ deaktiviert sein.

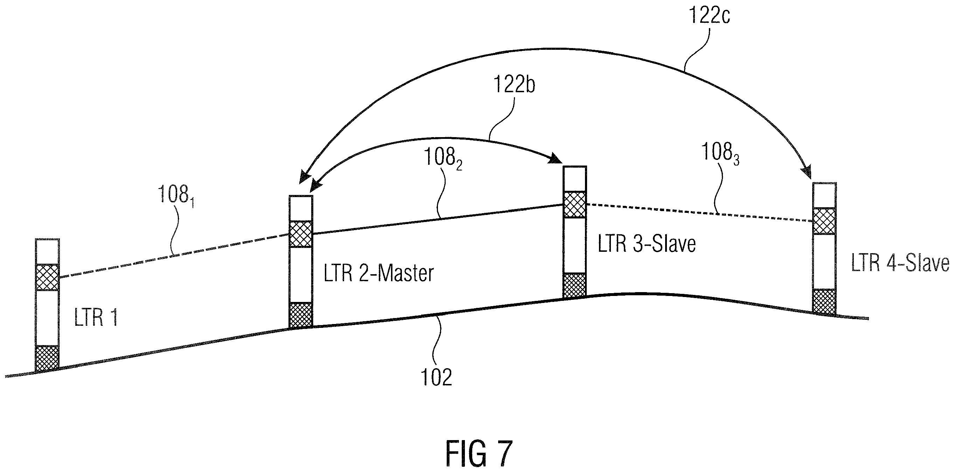

Nachdem der Abgleichvorgang der Laserebene $108_1$ abgeschlossen ist, beendet der Master-LTR, der LTR 1, die Kommunikation und übergibt den Master-Status an den LTR 2, wie dies in Fig. 7 schematisch durch den Pfeil 134 gezeigt ist. Der neue Master-LTR, der LTR 2, führt eine Kommunikation mit den verbleibenden LTRs, dem LTR 3 und dem LTR 4 durch, wie durch die Pfeile 122a, 122b schematisch angedeutet ist, um Informationen über die Positionen der LTRs zu erhalten, so dass im nächsten Schritt der LTR 2, der jetzige Master, mit dem LTR-Slave, der die kürzeste Entfernung zu dem LTR-Master aufweist, kommunizieren kann, um einen Abgleichvorgang für die Laserebene $108_2$ durchzuführen. Der Abgleichvorgang entspricht wiederum dem Abgleichvorgang, der oben anhand der Fig. 4 und Fig. 5 erläutert wurde. Während dieses Vorgangs können die anderen Laserebenen $108_1$, $108_3$ deaktiviert sein. Die Abgleichvorgänge wiederholen sich so lange, bis alle Laserebenen im Raum ihre korrekte Projektionsebene erhalten haben.

Nachdem alle Lasertransceiver abgeglichen sind, ist das aufgespannte LTR-System für die Nivellierung bereit.

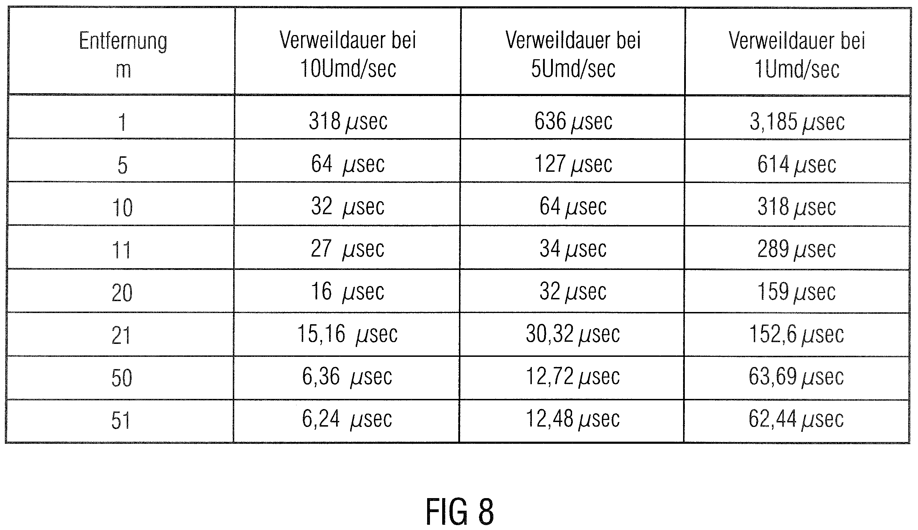

Wie oben erwähnt wurde, erfolgt die Verknüpfung der Laserebenen basierend darauf, dass eine Laserebene, die durch einen LTR erzeugt wird, bezüglich eines LTR, der die kürzeste Entfernung zu dem Master-LTR aufweist, abgeglichen wird. Neben der oben erwähnten Positionsbestimmung unter Verwendung des GPS, ist es gemäß Ausführungsbeispielen möglich, eine relative Positions- bzw. Abstandsberechnung unter Verwendung des rotierenden Laserstrahls, der von dem Master-LTR ausgesendet wird, durchzuführen. Hierzu wird die Verweildauer des rotierenden Laserstrahls auf der entsprechenden Fotodiode im Empfänger eines Slave-LTR ermittelt. Je weiter der Empfänger von dem Lasersender entfernt ist, umso kürzer ist die Verweildauer. Die Verweildauer ist ferner noch von der vertikalen Empfangsbreite der Laserempfangsdioden abhängig, die gemäß Ausführungsbeispielen etwa 2 cm beträgt. Die Fig. 8 zeigt eine Tabelle, die einen Überblick über die Verweildauern bei drei unterschiedlichen Rotationsgeschwindigkeiten des Lasersenders angibt, sowie die entsprechende Entfernung. Wie zu erkennen ist, ist die erreichbare Genauigkeit der Abstandsmessung aufgrund der Auflösbarkeit der Impulsbreite im Bereich bis zu 10 m sehr genau, unter 1 cm. Danach nimmt die Messgenauigkeit ab. Die oben erwähnte Abstandsmessung eignet sich beispielsweise für die Glättung des Laser-Polygonzuges um die jeweiligen Lasertransceiver herum, wie dies nachfolgend noch näher erläutert wird.

Ebenso eignet sich die oben beschriebene Abstandsmessung für die Entfernungsbestimmung zwischen zwei Lasertransceivern während des Abgleichvorgangs, aber auch für eine Entfernungsmessung zwischen einem Lasertransceiver und einem Laserempfänger des Nivelliersystems an der Baumaschine.

Die einzelnen Laserlinien im Raum, wie sie durch die jeweiligen Lasertransceiver erzeugt werden, stellen gerade Linienabschnitte bzw. einen entsprechenden Polygonzug dar. Das übliche Höhenprofil eines zu bearbeitenden Untergrunds, beispielsweise einer Straße, entspricht aber eher einem geglätteten Polygonzug, wobei die Anzahl der Stützpunkte je nach Straßenverlauf unterschiedlich weit auseinanderliegen kann. Die oben erwähnte Glättung eines Laser-Polygonzuges, der durch die mehreren, nacheinander aufgestellten Lasertransceiver erzeugt wird, kann nach mehreren Prinzipien erfolgen.

Gemäß einem ersten Ansatz kann die Glättung durch den Fertiger bzw. die Baumaschine selbst erfolgen. Die Baumaschine selbst besitzt einen gewissen Glättungseffekt, wobei jedoch zu beachten ist, dass bei großen Höhenänderungen im Straßenverlauf die Stützpunkte, also die Lasertransceiver, näher beieinanderliegen sollen.

Eine weitere Möglichkeit der Glättung besteht durch Verwendung der GPS-Position, genauer gesagt über eine ortsbezogene Offset-Korrektur direkt am Laserempfänger des Nivelliersystems der Baumaschine. Dies bedeutet, dass sich der Lasernullpunkt des Laserempfängers des Nivelliersystems wegabhängig nur in kleinen Schritten, beispielsweise in Schritten von 0,1 mm, ändert, und basierend hierauf können beliebige ausgeformte Höhenreferenzen erzeugt werden.

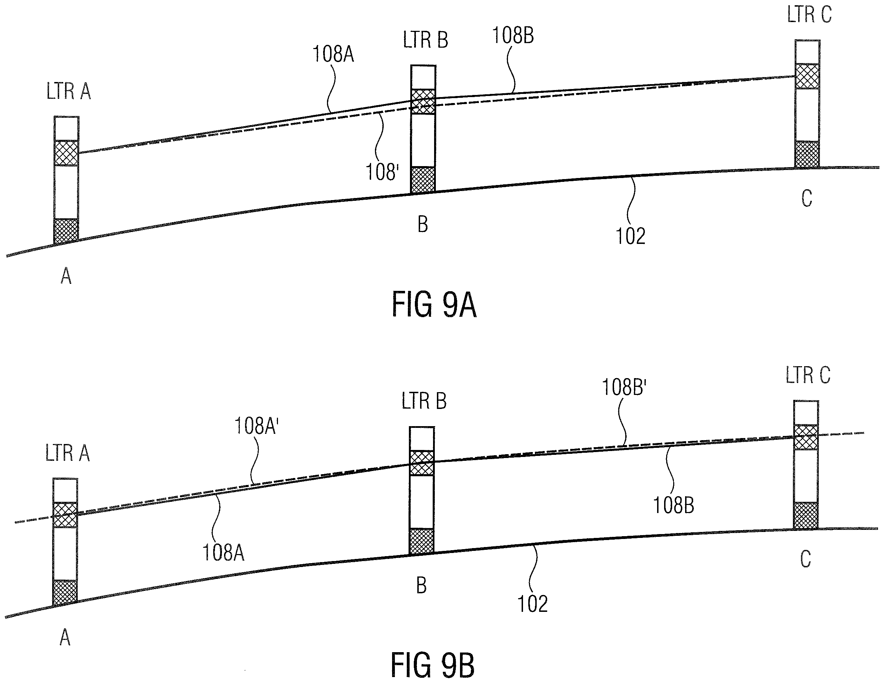

Ein weiterer Ansatz besteht darin, die Glättung über einen konvexen/konkaven Ausgleich des erzeugten Laser-Polygonzuges herbeizuführen. Die Fig. 9 zeigt schematisch zwei Ansätze für eine konvexe/konkave Glättung eines Laser-Polygonzuges, der durch drei Lasertransceiver LTR A, LTR B und LTR C erzeugt wird. In Fig. 9(a) ist eine Glättung um den mittleren LTR B gezeigt. Der LTR A erzeugt die Laserebene 108A, und der LTR B erzeugt die Laserebene 108B. Die Laserebenen 108A und 108B sind durch die durchgezogenen Linien in Fig. 9(a) dargestellt. Zur Glättung des Übergangs zwischen den Laserebenen 108A und 108B wird im Bereich des LTR B durch die Steuerung des Laserempfängers eine Glättung dahin gehend durchgeführt, dass sich ein Übergang einstellt, wie er durch die gestrichelte Linie 108'dargestellt ist. Fig. 9(b) zeigt eine konvexe oder konkave Glättung der Strecken zwischen den Lasertransceivern LTR A und LTR B bzw. LTR B und LTR C, die wiederum durch die Steuerung des Empfängers an der Baumaschine durchgeführt wird, wobei in Fig. 9(b) die geglätteten Strecken 108A' bzw. 108B' gezeigt sind.

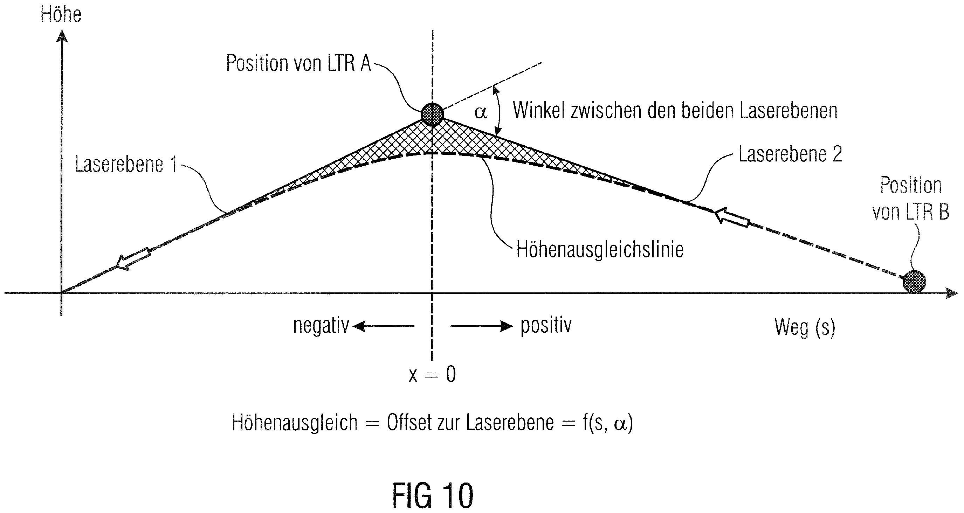

Gemäß Ausführungsbeispielen erfolgt die Glättung des Sollwerts durch den konvexen/konkaven Ausgleich mit Hilfe einer Weginformation derart, dass eine Offsetverschiebung am Laserempfänger vom Nivelliersystem am Straßenfertiger wegabhängig durchgeführt werden kann. Die Wegmessung bzw. die Wegberechnung bezieht sich auf die jeweilige Position des LTR, d.h. der Standort des LTR ist die Nullposition für die Wegangabe wie es in Fig. 10 verdeutlicht wird, anhand der die Bestimmung einer Höhenausgleichslinie gemäß dem gerade beschriebenen Ausführungsbeispiel erläutert wird. Die Weginformation relativ zur Position des LTR ist in Fig. 10 mit "x" bezeichnet. "s" ist eine inkrementelle Größe, die den insgesamt zurückgelegten Weg des Straßenfertigers angibt, wohingegen sich die Variable "x" stets auf den LTR bezieht. Die Positionsinformation "x" kann aber immer von der Weginformation "s" abgeleitet werden. Die sich ergebende Höhenausgleichslinie (siehe Fig. 10) liegt im Nivelliersystem als mathematische Gleichung vor, die in Abhängigkeit von der Position "x" und dem Laser-Schnittwinkel $\alpha$ (der Winkel zwischen den Laserebenen L1 und L2) berechnet wird. Die beiden Laserebenen schneiden sich auf Grund der Funktionalität der Laserebenensteuerung (Strahlaustrittspunkt des betrachteten LTR = Strahleintrittspunkt von dem benachbarten LTR) exakt an der jeweiligen Position vom LTR (in Fig. 10 ist der betrachtete LTR der LTR A). Der Laser- Schnittwinkel $\alpha$ ergibt sich wie folgt:

$$\alpha = \alpha_{LTR\ A} - \alpha_{LTR\ B}$$

wobei $\alpha_{LTR\ A}$ und $\alpha_{LTR\ B}$ die jeweiligen absoluten Winkel des Längsrichtungsvektors sind.

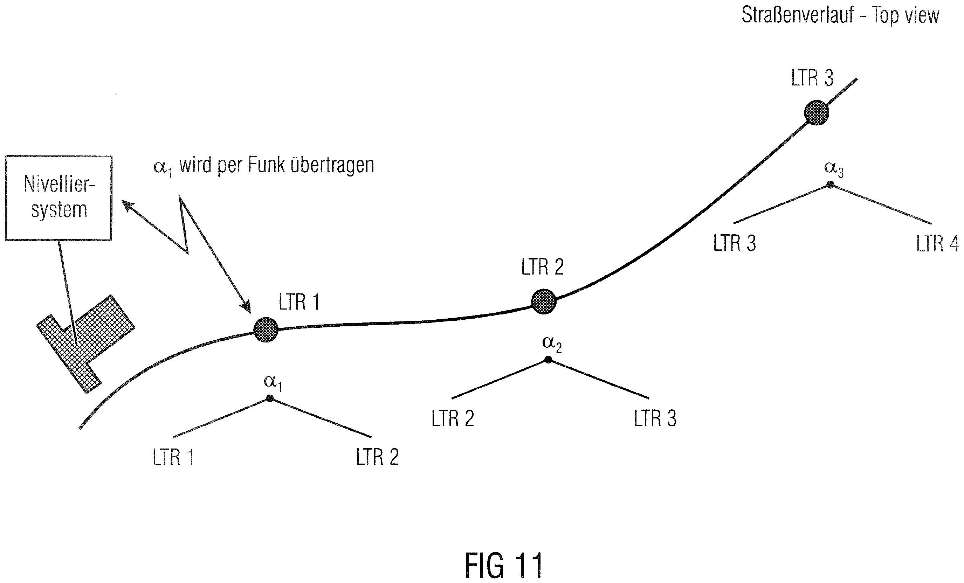

Diese absoluten Winkel bzw. Neigungen der Längsrichtungsvektoren ($\alpha_{LTR}$) werden jeweils über Neigungssensoren, die fest mit der Laserebene gekoppelt sind, gemessen und ausgewertet. Jeder Lasertransmitter benötigt die Neigungsinformation ($\alpha_{LTR}$) von dem benachbarten LTR, um den Laser-Schnittwinkel zu berechnen. Per Funk wird dem jeweils benachbarten LTR die Neigung des eigenen Längsrichtungsvektors übermittelt, so dass jeder LTR den Laser-Schnittwinkel $\alpha$ für sich bestimmen kann. Dies wird anhand der Fig. 11 nochmals verdeutlicht. Wir in Fig. 11 gezeigt ist bestimmt der LTR1 den Winkel $\alpha_1$ mit Hilfe der absoluten Neigung der Längsrichtungsvektoren von LTR1 und LTR2. Der LTR2 und der LTR3 realisieren die Berechnung des Laser-Schnittwinkels entsprechend. Der Laser-Schnittwinkel $\alpha$ wiederum wird per Funk von jedem aktiv geschalteten LTR mit entsprechender Identifikation zum Nivelliersystem des Straßenfertigers übertragen (siehe Fig. 11), so dass das Nivelliersystem alle notwendigen Informationen (Laserschnittwinkel a, Position x und die beschreibenden Parameter der Höhenausgleichslinie) besitzt, um die Höhenausgleichslinie zu ermitteln. Die Höhenausgleichslinie kann nach unterschiedlichen mathematischen Verfahren berechnet werden. Als Beispiel seien die folgenden Verfahren genannt:

- Symmetrischer Ausgleich mit Parabelfunktion
- Interpolation nach Lagrange
- Interpolation nach Polynomansatz
- Newtonsche Interpolationsverfahren

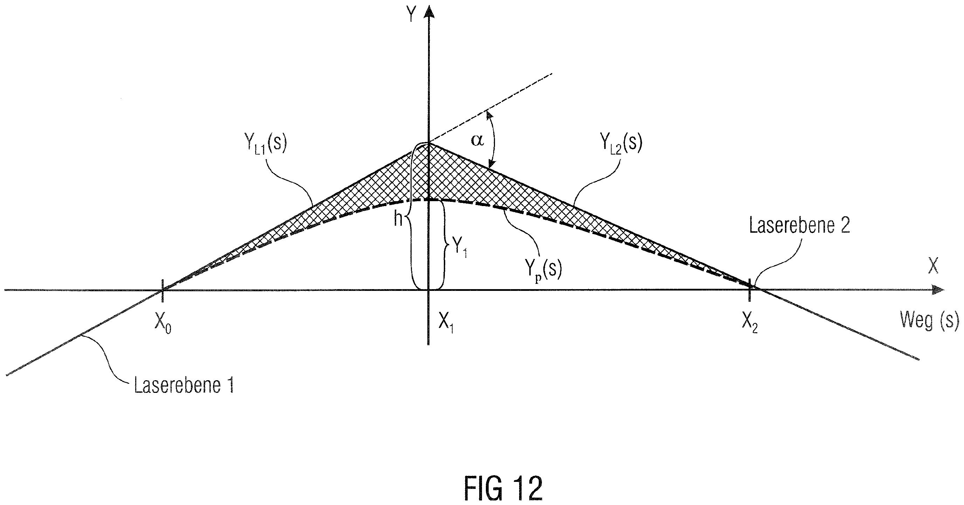

Exemplarisch wird nachfolgend mit Bezug auf die Fig. 12 die Ermittlung der Höhenausgleichslinie durch symmetrischen Ausgleich mit Parabelfunktion erläutert. Wie in Fig. 12 gezeigt ist, wird zunächst ein Koordinatensystem in die beiden Laserebenen gelegt. Die absolute Position X1 entspricht der jeweiligen Position des LTR um den der Höhenausgleich stattfinden soll. Die Weginformation x an der Position X1 (= Position des LTR) besitzt den Wert Null und kann wie folgt ermittelt werden:

- durch entsprechende Transformation des GPS-Positionssignal
- durch Abstandsmessung mit dem Laserempfänger des Nivelliersystems der Baumaschine über die Impulsbreite (z.B. durch die oben beschriebene Laserabstandsmessung)

In Abhängigkeit vom dem Laser-Schnittwinkel $\alpha$ wird dann die Funktionen $Y_{L1}(s)$, $Y_{L2}(s)$, $Y_p(s)$ und daraus folgend $Y_{offset}$ (der eigentliche Offsetwert für den konvexen/konkaven Ausgleich) berechnet. Zunächst sind jedoch folgende Größen zu bestimmen:

- 

$$X_0 = -(\alpha * 10\text{m}/°)$$

- 

$$X_1 = 0$$

- 

$$X_2 = -X_0 = +(\alpha * 10\text{m}/°)$$

Der Wert 10m/° ist eine Konstante, die bei der Systeminitialisierung festgelegt wird. Dieser Wert bestimmt im Wesentlichen die Stärke des konvexen/konkaven Ausgleichs.

- $\tan(\alpha) = h / X0 \rightarrow h = \tan(\alpha) * X0$
- $Y_1 = h/b \rightarrow b$ ist ebenfalls eine festzulegende Konstante
  $\rightarrow$ z.B. $Y_1 = h/2$

Daraus ergibt sich die folgende Tabelle für die Höhenausgleichslinie:

| X - Werte | $X_0$ | $X_1$ | $X_2$ |
|-----------|-------|-------|-------|
| Y - Werte | 0 | h/2 | 0 |

Mit Hilfe der Wertetabelle und dem symmetrischen Ausgleich über die Parabelfunktion lässt sich $Y_p(s)$ wie folgt darstellen:

$$Y_p(s) = \frac{h}{2} - ax^2$$

Für den Parameter a ergibt sich an der Stelle $x = X_0$:

$$a = \frac{\frac{h}{2} - y}{X_0^2} = \frac{h}{2 \cdot X_0^2}$$

Daraus folgt für $Y_P(s)$

$$Y_P(s) = \frac{h}{2} - \frac{h}{2 \cdot X_0^2} \cdot x^2 = h\left(\frac{1}{2} - \frac{x^2}{2 \cdot X_0^2}\right)$$

Weiterhin ergibt sich die Berechnung der Laserebenen $Y_{L1}(s)$ und $Y_{L2}(s)$ mit Hilfe der Gradengleichung:

$$Y_{L1}(s) = \frac{h}{X_0} \cdot x + h = h\left(\frac{x}{X_0} + 1\right)$$

$$Y_{L2}(s) = h - \frac{h}{X_0} \cdot x = h\left(1 - \frac{x}{X_0}\right)$$

Die Variable x (abgeleitet vom Weg s), ist die Position relativ zum LTR. Für die Berechnung des Offsetwerts ergibt sich:

$$Y_{offset} \text{ für } x<0: \qquad = Y_{L1}(s) - Y_P(s)$$

$$Y_{offset} \text{ für } x>0: \qquad = Y_{L2}(s) - Y_P(s)$$

Nach dem Einsetzen und vereinfachen folgt:

$$Y_{offset} = h \cdot \left(\frac{x^2}{2 \cdot X_0^2} - \frac{|x|}{X_0} + \frac{1}{2}\right)$$

Um diesen Offsetwert verschiebt sich nun wegabhängig der Nullpunkt des Laserempfängers auf den das Nivelliersystem die absolute Höhe der Bohle regelt.

Die Auswahl des Glättungsmechanismus kann z.B. durch das Nivelliersystem der Baumaschine anhand von vermessungstechnischen Forderungen bestimmt werden. Ferner ist es möglich, aufgrund der Lage der Längsvektoren von mehreren nebeneinanderliegenden Lasertransceivern eine Glättungsfunktion automatisch zu bestimmen.

Ein Vorteil der erfindungsgemäßen Laserhöhenreferenz besteht darin, dass diese, verglichen mit herkömmlichen Ansätzen, sehr einfach aufstellbar ist, so dass zum einen ein nur geringer Vermessungsaufwand erforderlich ist, und zum anderen ein direkter Bezug zum Untergrund besteht. Die Aufstellung der Lasertransceiver kann aufgrund unterschiedlicher Überlegungen durchgeführt werden, wobei nachfolgend einige dieser Überlegungen dargestellt seien.

Die Lasertransceiver können gemäß einem ersten Ansatz willkürlich in bestimmten Abständen, z.B. in Abständen zwischen 10 m und 100 m je nach Geländeverlauf, aufgestellt werden. Der Lasertransceiver hat einen Bezug zum Untergrund durch das einfache Aufstellen des Lasertransceivers, und in jedem Fall sind die Punkte, an denen der Laserstrahl auftritt, die Referenzpunkte im Raum, die nicht gesondert ausgemessen werden müssen, jedoch einen definierten Bezug zum Untergrund haben. Dies bedeutet, dass es für die Bereitstellung der Höhenreferenz ausreichend ist, die LTRs so aufzustellen, dass die ausgegebenen Lasersignale eine vorbestimme Höhenbeziehung zum Untergrund aufweisen. Bei anderen Ansätzen können definierte Aufstellungspunkte durch einen Vermesser vorab bestimmt werden, ohne dass es jedoch einer exakten Höhenvorgabe bedarf.

Für die gerade genannten Möglichkeiten kann ein Lasertransceiver derart ausgestattet sein, dass er einen einfachen Einbau durch ein Nicht-Vermessungspersonal ermöglicht, beispielsweise dadurch, dass eine Befestigung am Boden derart erfolgt, dass eine Referenzposition des Lasertransceivers auf dem Untergrund aufliegt und eine Position des Lasersenders/Empfängers bezüglich dieser Referenzposition auf einfache Art und Weise auf einen vorbestimmten Wert eingestellt werden kann, der einer erwünschte Höhe über dem Untergrund entspricht, so dass es keiner Vermessung im Hinblick auf die Höhe bedarf Bei einem anderen Ansatz können definierte Aufstellungspunkte mit einer Höhenvorgabe von einem Vermesser bereitgestellt werden, in diesem Fall kann ein spezieller LTR-Aufnahmeadapter von dem Vermesser auf eine exakte Höhe eingestellt werden, und der eigentliche LTR wird dann vor dem Einbaubeginn an dieser Position lediglich aufgesteckt, vergleichbar mit im Stand der Technik bekannten Schnureisen mit Seilhalter, die bei der herkömmlichen Seilreferenz zum Einsatz kommt.

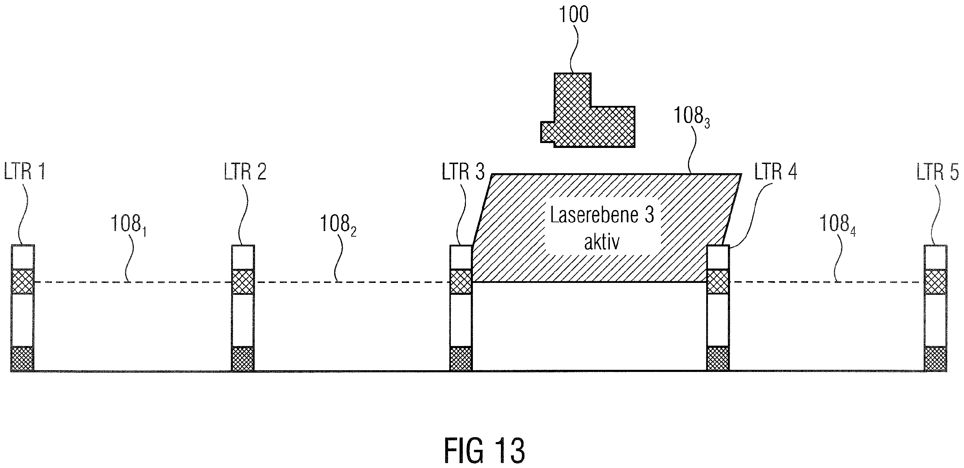

Nachdem die erfindungsgemäße Laserhöhenreferenz aufgebaut wurde und die Lasertransceiver abgeglichen wurden, wie dies oben beschrieben wurde, ist das aufgespannte LTR-System für die Nivellierung bereit. Gemäß Ausführungsbeispielen ist vorgesehen, dass für den Fall, dass eine Baumaschine mit einem entsprechend abgestimmten Laserempfänger den Nivellierprozess startet, diejenige Laserebene aktiv geschaltet wird, die positionsmäßig mit der Baumaschinenposition maximal korreliert, wie dies schematisch anhand der Fig. 13 dargestellt ist. In Fig. 13 ist eine schematische Darstellung eines Abschnitts einer zu bearbeitenden Strecke 102 dargestellt, entlang der eine Mehrzahl von Lasertransceivern LTR 1 bis LTR 5 angeordnet ist, die dazu dienen entsprechende Laserebenen $108_1$-$108_4$ zu erzeugen. Ferner ist schematisch die Baumaschine 100 dargestellt, deren xyz-Position bekannt ist. Ferner ist die Position der Lasertransceiver LTR 1 bis LTR 5 bekannt, und bei dem in Fig. 13 gezeigten Ausführungsbeispiel sei angenommen, dass sich die Baumaschine im Bereich zwischen den Lasertransceivern LTR 3 und LTR 4 befindet, so dass die Laserebene $108_3$, die durch den Lasertransceiver LTR 3 erzeugt wird, aktiv geschaltet ist. Die verbleibenden Laserebenen $108_1$, $108_2$, $108_4$ sind deaktiviert, d.h. die Lasertransceiver LTR 1, LTR 2, LTR 4 und LTR 5 erzeugen kein Lasersignal zum Definieren einer Laserebene. Das Lasernivellierungssystem an der Baumaschine kann mit den jeweiligen Lasertransceivern über eine Funkkommunikation verbunden sein, und ausgehend von der Position der Baumaschine übernimmt dann das Lasernivellierungssystem die Aktivierung und Deaktivierung der einzelnen Laserebenen durch entsprechende Kommunikation mit den Lasertransceivern.

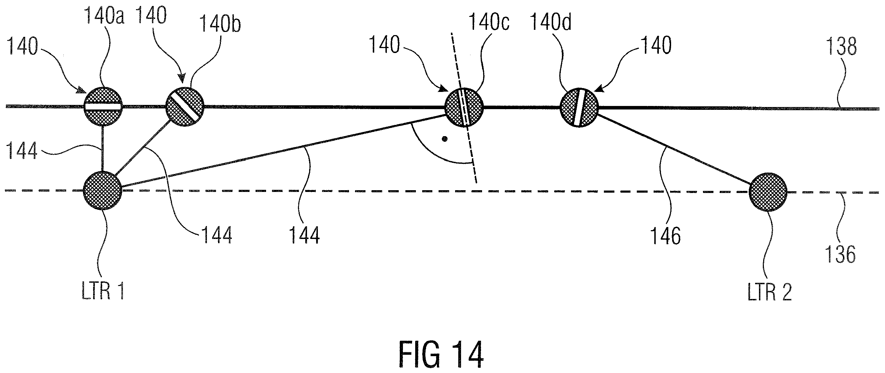

Gemäß Ausführungsbeispielen ist vorgesehen, dass der Laserempfänger des Nivellierungssystems eine automatische Ausrichtung zum Laserstrahl erfährt, durch den die Laserebene definiert wird. Vorzugweise erfolgt die Ausrichtung über einen im Laserempfänger des Nivelliersystems befindlichen Drehmechanismus, der die Laserempfangsdioden, vorzugsweise orthogonal zum Laserstrahl ausrichtet, wobei eine orthogonale Ausrichtung nur dann vorhanden ist, wenn die Fotodioden ein maximal breites Empfangssignal detektieren. Die Fig. 14 zeigt eine automatische Ausrichtung des Laserempfängers des Nivelliersystems, um vorzugsweise orthogonale Ausrichtungen desselben an verschiedenen Positionen entlang einer Nivellierlinie beizubehalten. Die Fig. 14 zeigt einen Ausschnitt des Laserhöhenreferenzsystems, genauer gesagt einen ersten Lasertransceiver LTR 1 und einen zweiten Lasertransceiver LTR 2, die entlang einer Aufstelllinie 136 benachbart zueinander angeordnet sind. Ferner ist die Nivellierlinie 138 dargestellt, entlang der sich der Laserempfänger 140 des Nivelliersystems der Baumaschine bewegt. Entlang der Nivellierlinie 138 sind verschiedene, zeitlich beabstandete Positionen des Laserempfängers 140 dargestellt, die sich aufgrund einer Bewegung der Baumaschine entlang der Nivellierlinie 138 zwischen den zwei Lasertransceivern LTR 1 und LTR 2 ergeben. An den Positionen 140a bis 140c erfolgt mittels eines Drehmechanismus eine Ausrichtung des Laserempfängers 140 derart, dass dessen Fotodiodenarray 142 senkrecht auf den rotierenden Laserstrahl 144 ausgerichtet ist, wobei der Laserstrahl 144 die Laserebene, die durch den LTR 1 definiert wird, erzeugt. Nach dem Erreichen der Position 140c wird beispielsweise durch die Steuerung des Nivelliersystems detektiert, dass der Abstand der Baumaschine zum Lasertransceiver LTR 1 größer ist als der Abstand zum Lasertransceiver LTR 2, so dass eine durch den Lasertransceiver LTR 2 definierte Laserebene aktiv geschaltet wird und der Lasertransceiver LTR 1 deaktiviert wird. In diesem Fall erfolgt nachfolgend zur Position 140c eine Ausrichtung des Laserempfängers 140 auf den Laserstrahl 146 des Lasertransceivers LTR 2, wie dies bei der Position 140d dargestellt ist, so dass das Fotodiodenarray 142 senkrecht zum Laserstrahl 146 ausgerichtet ist.

Die Drehung des Laserempfängers 140 ermöglicht ferner die Messung unterschiedlicher Winkel bezogen auf die Position des jeweiligen Lasertransceivers, die dann neben dem Abstand auch eine relative Positionsbestimmung des Laserempfängers 140 bezogen auf die Position des LTR ermöglichen.

Wie oben erwähnt wurde, kann an einer Position zwischen zwei Lasertransceivern ein Umschalten von einer Laserebene auf die nächste Laserebene erfolgen, und die Umschaltpunkte der Laserebenen befinden sich vorzugsweise in der Nähe der jeweiligen installierten Lasertransceiver. Fährt die Baumaschine an einem Lasertransceiver vorbei, so erfolgt eine entsprechende Kommunikation zwischen dem Nivelliersystem der Baumaschine und dem Lasertransceiver, wobei gemäß Ausführungsbeispielen eine Umschaltung aufgrund der Position der Baumaschine erfolgen kann, wobei hier zusätzlich die Position der Lasertransceiver bekannt sein muss. Alternativ kann eine Umschaltung aufgrund einer Laserimpulsauswertung am Laserempfänger der Baumaschine erfolgen, so dass beispielsweise festgestellt wird, dass der Abstand zum nächsten Lasertransmitter geringer ist als ein Abstand zum bisherigen Lasertransmitter, so dass nunmehr die neue, nachfolgende Laserebene aktiv geschaltet wird.

Gemäß Ausführungsbeispielen der Erfindung wird das oben beschriebene erfindungsgemäße Laserhöhenreferenzsystem beim Einsatz von Baumaschinen mit Werkzeugen zur Bearbeitung des Untergrunds eingesetzt, insbesondere beim Straßenbau, beispielsweise für einen Straßenfertiger, eine Straßenfräse, eine Walze oder einen Grader.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung zum Bereitstellen einer Höhenreferenz für ein Werkzeug (150) einer Baumaschine (100), mit:

   einem Lasersender (116), der auf einer vorbestimmten Höhe über einem durch das Werkzeug (150) der Baumaschine (100) zu bearbeitenden Untergrund (114) angeordnet ist; und
   einem Laserempfänger (118), der auf der vorbestimmten Höhe und entlang einer durch das Werkzeug (150) der Baumaschine (100) zu bearbeitenden Strecke (102) beabstandet von dem Lasersender (116) angeordnet ist, wobei der Lasersender (116) ausgebildet ist, um einen oder mehrere Laserstrahlen (130, 144, 146) zur Definition einer Laserebene (108) derart abzustrahlen, dass deren Längsrichtungsvektor (110) auf den Laserempfänger (118) gerichtet ist,
   wobei der eine oder die mehreren Laserstrahlen (130, 144, 146) durch einen an dem Werkzeug (150) der Baumaschine (100) angeordneten Empfänger (140) zum Bestimmen der Höhe des Werkzeugs (150) über dem zu bearbeitenden Untergrund (114) empfangbar sind,
   wobei der Lasersender (116) und der Laserempfänger (118) jeweils einen Lasertransceiver (106, LTR) zum Senden und Empfangen von Laserstrahlen (130, 144, 146) umfassen,
   wobei die Vorrichtung eine Mehrzahl von entlang der zu bearbeitenden Strecke (102) beabstandeten Lasertransceivern (106, LTR) aufweist, und
   wobei die Vorrichtung eine Kommunikationsverbindung (122) aufweist, die die Mehrzahl von Lasertransceivern (106, LTR) verbindet,
   **dadurch gekennzeichnet, dass**
   zwei benachbarte Lasertransceiver (106, LTR) ausgebildet sind, um miteinander zu kommunizieren, um eine Ausrichtung des Längsrichtungsvektors (110) des sendenden Lasertransceivers (106, LTR) auf eine Referenzposition auf dem empfangenden Lasertransceiver (106, LTR) zu bewirken, und
   der empfangende Lasertransceiver (106, LTR) ausgebildet ist, um ansprechend auf eine Kommunikation mit dem sendenden Lasertransceiver (106, LTR) eine Neigung zumindest eines Empfängerteils des empfangenden Lasertransceivers (106, LTR) entsprechend einer Neigung des Querrichtungsvektors (112) der durch den sendenden Lasertransceiver (106, LTR) erzeugten Laserebene (108) zu bewirken.

2. Vorrichtung nach Anspruch 1, bei der der Lasersender (116) die Laserebene (108) derart erzeugt, dass ein zum Längsrichtungsvektor (110) senkrechter Querrichtungsvektor (112) eine vorbestimmte Neigung aufweist.

3. Vorrichtung nach Anspruch 1 oder 2, bei der die Lasertransceiver (106, LTR) ausgebildet sind, um die Erzeugung einer Laserebene (108) ansprechend auf eine Position der Baumaschine (100) zu aktivieren.

4. Vorrichtung nach einem der Ansprüche 1 bis 3, bei der der Lasersender (116) zumindest einen rotierenden Laserstrahl (130, 144, 146) erzeugt.

5. Verfahren zur Höhensteuerung eines Werkzeugs (150) einer Baumaschine (100), mit folgenden Schritten:

   Erzeugen einer Laserebene (108) durch eine Vorrichtung nach einem der Ansprüche 1 bis 4;
   Empfangen eines Laserstrahls (130, 144, 146) an einem Empfänger (140), der an dem Werkzeug (150) der Baumaschine (100) angeordnet ist;
   basierend auf dem empfangenen Laserstrahl (130, 144, 146), Bestimmen einer Höhe des Werkzeugs (150) bezüglich eines zu bearbeitenden Untergrunds (114); und
   basierend auf der bestimmten Höhe und einer Soll-Höhe, Steuern des Werkzeugs (150) auf die Soll-Höhe.

**Claims**

1.  Apparatus for providing a height reference for a tool (150) of a construction machine (100), comprising:

    a laser transmitter (116) arranged at a predetermined height over a ground (114) to be processed by the tool (150) of the construction machine (100); and
    a laser receiver (118) arranged at the predetermined height and spaced apart from the laser transmitter (116) along a distance (102) to be processed by the tool (150) of the construction machine (100),
    wherein the laser transmitter (116) is configured to emit one or several laser beams (130, 144, 146) for the definition of a laser plane (108) such that their longitudinal direction vector (110) is directed to the laser receiver (118),
    wherein the one or the several laser beams (130, 144, 146) may be received by a receiver (140) arranged at the tool (150) of the construction machine (100) in order to determine the height of the tool (150) over the ground (114) to be processed,
    wherein the laser transmitter (116) and the laser receiver (118) each include a laser transceiver (106, LTR) for transmitting and receiving laser beams (130, 144, 146),
    wherein the apparatus comprises a plurality of laser transceivers (106, LTR) spaced apart along the distance (102) to be processed, and
    wherein the apparatus comprises a communication connection (122) that connects the plurality of laser transceivers (106, LTR),
    **characterized in that**
    two neighboring laser transceivers (106, LTR) are configured to communicate with each other in order to cause an orientation of the longitudinal direction vector (110) of the transmitting laser transceiver (106, LTR) to a reference position on the receiving laser transceiver (106, LTR), and
    the receiving laser transceiver (106, LTR) is configured to cause, in response to a communication with the transmitting laser transceiver (106, LTR), an inclination at least of a receiver part of the receiving laser transceiver (106, LTR) according to an inclination of the transversal direction vector (112) of the laser plane (108) generated by the transmitting laser transceiver (106, LTR).

2.  Apparatus according to claim 1, wherein the laser transmitter (116) generates the laser plane (108) such that a transversal direction vector (112) that is perpendicular to the longitudinal direction vector (110) comprises a predetermined inclination.

3.  Apparatus according to claim 1 or 2, wherein the laser transceiver (106, LTR) is configured to activate the generation of a laser plane (108) in response to a position of the construction machine (100).

4.  Apparatus according to any one of claims 1 to 3, wherein the laser transmitter (116) generates at least one rotating laser beam (130, 144, 146).

5.  Method for height control of a tool (150) of a construction machine (100), comprising:

    generating a laser plane (108) by means of an apparatus according to any one of claims 1 to 4;
    receiving a laser beam (130, 144, 146) at a receiver (140) arranged at the tool (150) of the construction machine (100);
    based on the received laser beam (130, 144, 146) determining a height of the tool (150) with respect to a ground (114) to be processed; and
    based on the determined height and a target height, controlling the tool (150) to the target height.

**Revendications**

1.  Dispositif pour fournir une référence de hauteur pour un outil (150) d'un engin de chantier (100), avec:

    un émetteur laser (116) qui est disposé à une hauteur prédéterminée au-dessus d'un sol (114) à traiter par l'outil (150) de l'engin de chantier (100); et
    un récepteur laser (118) qui est disposé à la hauteur prédéterminée et le long d'un trajet (102) à traiter par l'outil (150) de l'engin de chantier (100) à une distance de l'émetteur de laser (116),
    dans lequel l'émetteur laser (116) est conçu pour émettre un ou plusieurs faisceaux laser (130, 144, 146) pour définir un plan laser (108) de sorte que son vecteur de direction longitudinale (110) soit orienté vers le récepteur laser (118),

dans lequel l'un ou les plusieurs faisceaux laser (130, 144, 146) peuvent être reçus par un récepteur (140) disposé sur l'outil (150) de l'engin de chantier (100) pour déterminer la hauteur de l'outil (150) au-dessus du sol à traiter (114),

dans lequel l'émetteur laser (116) et le récepteur laser (118) comportent, chacun, un émetteur-récepteur laser (106, LTR) destiné à émettre et recevoir des faisceaux laser (130, 144, 146),

dans lequel le dispositif présente une pluralité d'émetteurs-récepteurs laser (106, LTR) distants l'un de l'autre le long du trajet à traiter (102), et

dans lequel le dispositif présente une liaison de communication (122) qui connecte la pluralité d'émetteurs-récepteurs laser (106, LTR),

**caractérisé par le fait que**

deux émetteurs-récepteurs laser adjacents (106, LTR) sont conçus pour communiquer l'un avec l'autre pour provoquer un alignement du vecteur de direction longitudinale (110) de l'émetteur-récepteur laser émetteur (106, LTR) sur une position de référence sur l'émetteur-récepteur laser de réception (106, LTR); et

l'émetteur-récepteur laser récepteur (106, LTR) est conçu pour provoquer, en réponse à une communication avec l'émetteur-récepteur laser émetteur (106, LTR), une inclinaison d'au moins une partie de réception de l'émetteur-récepteur laser récepteur (106, LTR) correspondant à une inclinaison du vecteur de direction transversale (112) du plan laser (108) généré par l'émetteur-récepteur laser émetteur (106, LTR).

2.  Dispositif selon la revendication 1, dans lequel l'émetteur laser (116) génère le plan laser (108) de sorte qu'un vecteur de direction longitudinale (110) perpendiculaire au vecteur de direction transversale (112) présente une inclinaison prédéterminée.

3.  Dispositif selon la revendication 1 ou 2, dans lequel les émetteurs-récepteurs lasers (106, LTR) sont conçus pour activer la génération d'un plan laser (108) en réponse à une position de l'engin de chantier (100).

4.  Dispositif selon l'une des revendications 1 à 3, dans lequel l'émetteur laser (116) génère au moins un faisceau laser rotatif (130, 144, 146).

5.  Procédé de régulation de hauteur d'un outil (150) d'un engin de chantier (100), aux étapes suivantes consistant à:

    générer un plan laser (108) par un dispositif selon l'une des revendications 1 à 4;

    recevoir un faisceau laser (130, 144, 146) à un récepteur (140) qui est disposé sur l'outil (150) de l'engin de chantier (100);

    sur base du faisceau laser reçu (130, 144, 146), déterminer une hauteur de l'outil (150) par rapport à un sol à traiter (114); et

    sur base de la hauteur déterminée et d'une hauteur de consigne, réguler l'outil (150) à la hauteur de consigne.

FIG 1

FIG 2

EP 2 998 699 B1

FIG 3

EP 2 998 699 B1

FIG 4

EP 2 998 699 B1

FIG 5

EP 2 998 699 B1

FIG 6

FIG 7

| Entfernung m | Verweildauer bei 10Umd/sec | Verweildauer bei 5Umd/sec | Verweildauer bei 1Umd/sec |
|---|---|---|---|
| 1 | 318 $\mu$sec | 636 $\mu$sec | 3,185 $\mu$sec |
| 5 | 64 $\mu$sec | 127 $\mu$sec | 614 $\mu$sec |
| 10 | 32 $\mu$sec | 64 $\mu$sec | 318 $\mu$sec |
| 11 | 27 $\mu$sec | 34 $\mu$sec | 289 $\mu$sec |
| 20 | 16 $\mu$sec | 32 $\mu$sec | 159 $\mu$sec |
| 21 | 15,16 $\mu$sec | 30,32 $\mu$sec | 152,6 $\mu$sec |
| 50 | 6,36 $\mu$sec | 12,72 $\mu$sec | 63,69 $\mu$sec |
| 51 | 6,24 $\mu$sec | 12,48 $\mu$sec | 62,44 $\mu$sec |

FIG 8

FIG 9A

FIG 9B

Höhenausgleich = Offset zur Laserebene = f(s, α)

FIG 10

EP 2 998 699 B1

Straßenverlauf - Top view

LTR 3

$\alpha_1$ wird per Funk übertragen

Nivellier-system

LTR 1

$\alpha_3$

LTR 3          LTR 4

LTR 2

LTR 2          LTR 3

$\alpha_2$

$\alpha_1$

LTR 1          LTR 2

FIG 11

EP 2 998 699 B1

FIG 12

EP 2 998 699 B1

EP 2 998 699 B1

100

$108_3$

LTR 1　　　　LTR 2　　　　LTR 3　　　　　　　　LTR 4　　　LTR 5

$108_1$　　　　$108_2$

Laserebene 3
aktiv

$108_4$

FIG 13

FIG 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4820041 A
- DE 3738954 A1
- DE 19651251 A1
- EP 2400263 A2
- US 6314650 B1
- DE 2919505 A
- US 6324455 B1
- EP 2400265 A1
- US 20010023766 A1
- US 3494426 A